(19)

Europäisches
Patentamt
European
Patent Office
Office européen
des brevets

(11) **EP 3 396 538 B1**

(12) **EUROPEAN PATENT SPECIFICATION**

(45) Date of publication and mention
of the grant of the patent:
**08.11.2023 Bulletin 2023/45**

(21) Application number: **17168725.4**

(22) Date of filing: **28.04.2017**

(51) International Patent Classification (IPC):
**G06F 9/445** (2018.01)      **G06F 8/36** (2018.01)
**G05B 19/042** (2006.01)      **G05B 19/418** (2006.01)

(52) Cooperative Patent Classification (CPC):
**G06F 9/44505;** G05B 19/042; G05B 19/418;
G06F 8/36; G06F 9/451; Y02P 90/02

(54) **A METHOD AND APPARATUS FOR DEPLOYMENT OF AN AGENT TO A TARGET DEVICE OF A TARGET SYSTEM**

VERFAHREN UND VORRICHTUNG ZUM EINSATZ EINES WIRKSTOFFES GEGEN EINE ZIELVORRICHTUNG EINES ZIELSYSTEMS

PROCÉDÉ ET APPAREIL POUR LE DÉPLOIEMENT D'UN AGENT À UN DISPOSITIF CIBLE D'UN SYSTÈME CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.10.2018 Bulletin 2018/44**

(73) Proprietor: **Siemens Aktiengesellschaft 80333 München (DE)**

(72) Inventors:
- **Lamparter, Steffen 85622 Feldkirchen (DE)**
- **Thon, Ingo 81541 München (DE)**

(74) Representative: **Siemens Patent Attorneys Postfach 22 16 34 80506 München (DE)**

(56) References cited:
- **JIMÉNEZ-RUIZ ERNESTO ET AL: "BootOX: Practical Mapping of RDBs to OWL 2", 24 October 2015 (2015-10-24), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 113 - 132, XP047414499, ISSN: 0302-9743 ISBN: 978-3-540-76785-5 [retrieved on 2015-10-24] * abstract; figures 1-2; table 1 * * paragraphs [0001] - [05.1], [0007] ***

- **KHARLAMOV EVGENY ET AL: "Capturing Industrial Information Models with Ontologies and Constraints", 23 September 2016 (2016-09-23), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 325 - 343, XP047357810, ISSN: 0302-9743 ISBN: 978-3-540-76785-5 [retrieved on 2016-09-23] * abstract; figures 1-5 * * paragraphs [0001] - [0004], [0006] ***
- **KHARLAMOV EVGENY ET AL: "How Semantic Technologies Can Enhance Data Access at Siemens Energy", 19 October 2014 (2014-10-19), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 601 - 619, XP047301266, ISSN: 0302-9743 ISBN: 978-3-540-76785-5 * abstract; figures 1-3 * * paragraphs [02.3] - [03.2], [04.1] - [04.2], [0006] ***
- **VLADIMIR VILLASEÑOR HERRERA; AXEL VIDALES RAMOS; JOSÉ L MARTÍNEZ LASTRA: "An agent-based system for orchestration support of web service-enabled devices in discrete manufacturing systems", JOURNAL OF INTELLIGENT MANUFACTURING, 17 May 2011 (2011-05-17), pages 2681-2702, ISSN: 1572-8145, DOI: 10.1007/s10845-011-0539-z**

EP 3 396 538 B1

**(Cont. next page)**

- MATTHIAS LOSKYLL; JOCHEN SCHLICK; STEFAN HODEK; LISA OLLINGER; TOBIAS GERBER; BOGDAN PIRVU: "Semantic service discovery and orchestration for manufacturing processes", 16TH CONFERENCE ON,- 20110905, EMERGING TECHNOLOGIES&FACTORY AUTOMATION (ETFA), 2011 IEEE, 5 September 2011 (2011-09-05), pages 1-8, DOI: 10.1109/ETFA.2011.6058988

**Description**

The invention relates to a method and apparatus for deploying an agent to a target device of a target system and in particular to a context-based deployment of analytical applications.

Target systems such as industrial automation systems can comprise a plurality of system components or target devices. An industrial system can for example require its automatic supervision where alarms are automatically generated in case of an abnormal behavior of a system component. In a conventional system plant floor data is captured by programmable logic controllers (PLC) and passed to a control system of a data concentrator on a plant level where application programs or agents are running. These agents can comprise analytical software application programs adapted to evaluate the received plant floor data. These agents can either trigger an alarm or initiate specific measures depending on the data received from the target system. These agents can run on a control system on programmable logic controllers (PLC). The agents or analytical software components can also be executed on specialized target devices like smart sensors implemented in the target system.

There exist different conventional approaches for the automatic collection of data provided by sensor elements of the target system that can be processed by agents.

There are different conventional approaches how to implement an agent on a specific target device able to execute or run an agent. However, in a complex target system the selection of a specific target device where the agent, i.e. the special analytical software component for evaluating the data, is to be deployed requires manual intervention by a user such as system engineer. In a conventional system the user has to decide where, i.e. in which specific target device, the agent shall be deployed. Further, the user is required to perform a manual configuration of the agent implemented on the selected target device. This process of selecting a suitable target device for executing the agent and the following configuration of the agent on the selected target device is error-prone.

Further, a human engineer performing the task of selecting a suitable target device for executing the agent may overlook an optimal technical solution, i.e. the optimal assignment of resources of the target system, since it is influenced by many different factors. Target systems such as an industrial plant comprise a plurality of target devices or components wherein each target device can have individual processing capabilities and other resources. Further the sensor data generated by sensor devices of the target system are generated at various locations of the target system. Hence the agent provided for processing the sensor data is to be deployed at a location within the target system where all relevant sensor data generated by different sensor devices is available. Sensor data originating from different sensor elements or sensor devices can be concentrated by a data concentrator and supplied to a control system or stored in a cloud storage of the target system. After concentration of the sensor data originating from different sensor elements at a central control element of the system all data may be available however the concentration of data leads to delays or inconsistencies of the sensor data generated by different sensor elements of the target system. In addition data, in particular sensor data, might be compressed along the data transmission path, i.e. the path from the sensor element to the control target device of the target system. Therefore it might be necessary to access data from a different data concentrator in the target system where the agent runs. However since it is desirable to run the agent as close to the data source as possible this might be not always be attractive due to resource restrictions. Accordingly, the decision where to implement an agent for evaluating data can be challenging for a user. Besides the difficulty to select a target device where the agent can be deployed it is often necessary to convert the sensor signals or sensor data to a data format expected by the data analyzing agent.

"BootOX: Practical Mapping of RDBs to OWL2" by Ernesto Jiménez-Ruiz relates to an ontology and mapping bootstrapper BootOX. With BootOX different "profiles" depending on the application scenario and the required semantic web technology are allowed to define. BootOX also allows to import domain ontologies, which will be integrated to the bootstrapped one via alignment or directly mapped to the data-base.

"Capturing Industrial Information Models with Ontologies and Constraints" by Evgeny Kharlamov relates to facilitating the design of ontologies and their deployment in applications as well as the model validation and query answering in realistic manufacturing scenarios provided by the tool SOMM. A mapping is defined with the tool SOMM, based on axiom/constraints expressed in Web Ontology Language involving constraint violation specifications.

How Semantic Technologies can enhance Data Access at Siemens Energy by Evgeny Kharlamov relates to data access challenge in Siemens Energy and applying OBDA in Siemens to address the data access challenge by using the Optique Platform. This system applies capabilities in create and edit mappings, edit and import ontologies, integrate several relational databases and data streams, formulate and visualize one time and continuous queries, and browse query results.

Document "An agent-based system for orchestration support of web service-enabled devices in discrete manufacturing systems" by Vladimir Villaseñor Herrera et al. (2011-05-17) discloses the specification of a web service-enabled Decision Support System (DSS) integrated by a set of software agents. The agent-based system disclosed there is capable of supporting the dynamic composition and orchestration of web services exposed by control devices on discrete manufacturing systems. Document "Semantic Service Discovery and Orchestration for Manufacturing Processes" by Matthias Loskyll et al. (2011-09-05) discloses a semantic service discovery and orchestration system, which is based on different semantic service technologies, and provides a concept towards the creation of adaptive production processes.

Accordingly it is an object of the present invention to provide a method and apparatus which allows effective and automatic deployment of an agent to a target device of a target system.

This object is achieved according to a first aspect of the present invention by a method for deploying an agent to a target device of a target system comprising the features of claim 1 and according to a second aspect of the present invention by a deployment system for deployment of an agent to a target device of a target system comprising the features of claim 10.

Fig. 1 shows a block diagram of a possible exemplary embodiment of a deployment system for deployment of an agent to a target device of a target system according to an aspect of the present invention;

Fig. 2 shows a schematic diagram of a specific example for illustrating the operation of a method and apparatus for deploying an agent to a target device of a target system according to the present invention;

Fig. 3 shows a flowchart of a possible exemplary embodiment of a method for deploying an agent to a target device of a target system according to an aspect of the present invention.

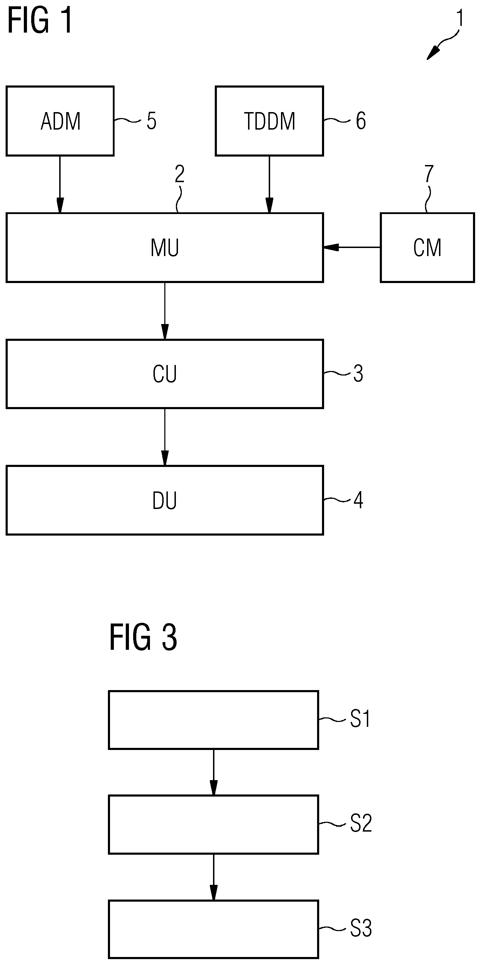

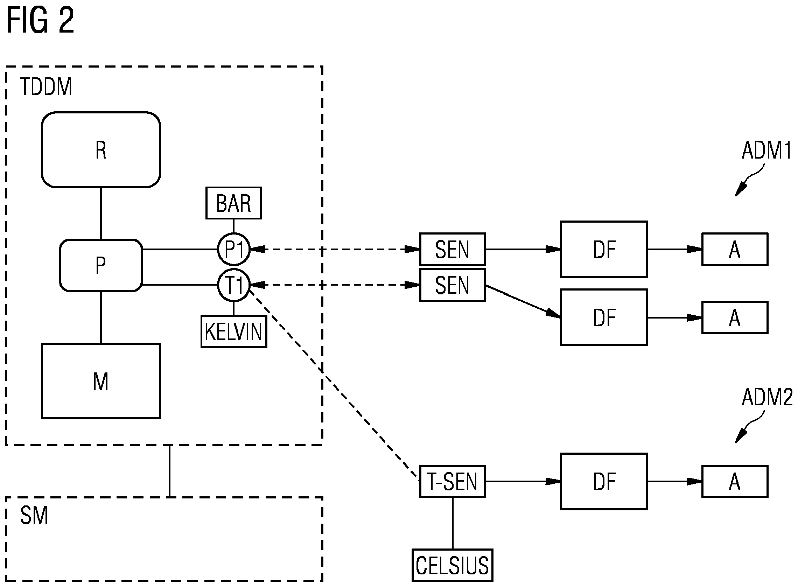

As illustrated in Fig. 1 a deployment system 1 according to an aspect of the present invention for deployment of an agent to a target device of a target system can comprise in a possible embodiment several sub-units. As it is illustrated in this specific embodiment the deployment system 1 comprises a mapping unit 2, calculation unit 3 and a deployment unit 4. Mapping unit 2 is adapted to perform a semantic mapping of an agent data model ADM of an agent to target device data models TDDM of target devices of the respective target system. Each target device data model TDDM comprises an associated suitability model SM. The target system can be any kind of target system such as an industrial target system having a plurality of different target devices and/or target components. The target system can comprise a plurality of hardware and/or software components. Some hardware components or hardware target devices within the target system are suitable for deploying and running an agent. For the different target devices of the target system corresponding associated target device data models TDDMs can be stored in a database. As illustrated in the embodiment of Fig. 1 the mapping unit 2 has access to an agent profile database 5 which stores a set of agent data models ADMs. Further, the mapping unit 2 has access to a resource profile database 6 which stores target device data models TDDMs of target devices of the respective target system. In the illustrated exemplary embodiment of Fig. 1 the mapping unit 2 of the deployment system 1 has further access to a conversion mapper database 7 which stores a set of predefined conversion mappers CMs. The mapping unit 2 is adapted to perform a semantic mapping of an agent data model ADM of the respective agent to target device data models TDDMs of target devices of the target system. An agent data model ADM of the agent can be read from the agent profile database 5. The target device data models TDDMs of the target devices of the target system can be read by the mapping unit 2 from the resource profile database 6 of the deployment system 1. Each target device data model TDDM read from the resource profile database 6 comprises an associated suitability model SM as also illustrated in Fig. 2.

As shown in Fig. 1 the deployment system 1 further comprises a calculation unit 3 adapted to calculate the suitability of each matching target device data model TDDM for the respective agent on the basis of its suitability model SM depending on resource requirements of the respective agent. In a possible embodiment the suitability model SM associated to the target device data model TDDM can comprise a suitability function SF of different target resources r. These target resources r can comprise in a possible embodiment sensor resources, computation resources, memory resources and/or communication resources.

The deployment system 1 further comprises a deployment unit 4 which is adapted to deploy an agent on the target device having the maximum calculated suitability.

In a possible embodiment a taxonomy of the target system can be stored in the resource profile database 6. In a possible implementation the taxonomy can comprise triples indicating a structure of the target system. For example the target system can comprise a plant comprising different components or target devices. The taxonomy of the plant can contain all possible resources r. The taxonomy of the target system, for instance the taxonomy of a plant, can describe the resources t available including those resources of the system where an agent can be deployed. Further the taxonomy can also comprise all sensory information. In a possible embodiment the taxonomy can be extracted automatically from a Comos data model of the plant. The taxonomy of the target system can comprise triples indicating a structure of the target system.

In the following an exemplary simple taxonomy of a target system is described in the form of triples.

    (tsensor1,isType,sensor)
    (tsensor2,isType,sensor)
    (flsensor1,isType,sensor)
    (fisensor1,isType,sensor)
    (reservoir1,isType,reservoir)

```
(pump1,isType,pump)
(pump2,isType,pump)
(kpiAgent,isType,agent)
(tsensor1,measures,temperature)
(tsensor2,measures,temperature)
(flsensor1,measures,flow)
(fisensor1,measures,fill)
(tsensor1,connected,pump1)
(psensor1,connected,pump1)
(tsensor2,connected,pump2)
(pump1,connected,reservoir1)
(kpiAgent,hasInputs,temperature)
(kpiAgent,hasInput,flow)
```

In a possible embodiment each resource r and each agent comprises attached resource requirements or costs. These resource costs can be driven by resource limitations such as processing power limitations or sensor accuracy. Costs for agents can comprise the required estimated computational costs.

In a possible embodiment an agent data model ADM for the selected agent is read from a set of agent data models ADMs stored in the agent profile data base 5 for performing a semantic mapping to different target device data models TDDMs of the target device of the respective target system. Inputs of the selected agent data model ADM can be mapped to the target device data models TDDMs stored in the resource profile data base 6 of the deployment system 1 through semantic matching using a resource description context of the target device data models TDDMs.

In a possible preferred embodiment of the deployment system 1 as illustrated in Fig. 1 compatibility between inputs of the agent data models, ADMs, of the selected agent and outputs of the target device data model TDDM of the target device having the maximum calculated suitability is checked before deployment of the agent on the respective target device. If the inputs of the agent data model ADM of the selected agent and the outputs of the target device data model TDDM having the maximum calculated suitability are not compatible conversion mappers CMs are inserted automatically to provide compatibility. These conversion mappers CMs can be read from a conversion mapper library CML stored in the conversion mapper data-base 7 of the deployment system 1 as illustrated in Fig. 1. The outputs of the target device data model TDDM of the target device can provide sensor data of sensor elements of the respective target device data model TDDM. The conversion mappers CMs can be inserted automatically between the outputs of the target device data model TDDM and the inputs of the agent data model ADM of the selected agent. The inserted conversion mappers CMs are adapted to convert sensor data generated by sensor elements of the target device data model TDDM into predefined signal formats expected by inputs of the agent data model ADM with respect to a sensor data sampling rate, a sensor signal domain and/or sensor data units.

As illustrated in Fig. 1 the deployment system 1 comprises a conversion mapper database 7 which stores a set of predefined conversion mappers CMs. In a specific exemplary embodiment the conversion mapper library CML is accessible via the internet (e.g. the conversion mapper library CML can be accessible through https:\\github.com\objorke\QuantityTypes). A simple example of a conversion mapper CML in the language of the taxonomy can for instance convert the measured temperature T given in Kelvin into temperature given in Celsius.

```
(x,isType,virtualsensor),(X,measures,temperature),(x,unit,kel vin), (X, connected,Y)
Iff
(Z,isType,sensor),(Z,measures,temperature),(Z,
unit,celcius),( Z,connected,Y)
```

Other conversion mappers CMs can be for instance adapted to map a sampling rate or to convert e. g. vibration data from a time domain into a frequency domain. Other conversion mappers can be adapted to calculate derivatives.

Conversion mappers CMs can be of more complex nature. For example if it is desired to measure the flow into a reservoir and the fill level of the reservoir prior and after the measuring time it is possible to approximate the flow sensor as follows:

```
(X,isType,virtualsensor),(X,measures,flow)
iff
(Z,isType,reservoir) & (S,isType,sensor) & (S,connected,Z) & (S,measures,fill)
```

These kinds of virtual sensors can be extended with costs. For instance they can reflect measurement errors or computational costs as well as the accuracy of the measurement.

In a possible embodiment for each target resource r of a target device a conversion mapper CM can be provided and the associated resource cost can be calculated based on an estimated resource demand and agent requirement as well as mapper execution cost. This can result in a suitability matrix from which an optimal conversion mapper and suitable target resources are selected based on predetermined optimization criteria such as a maximum result quality or minimum execution costs.

In a possible embodiment of the method for deploying an agent on a target device of a target system the method can comprise three main steps as illustrated in Fig. 3.

In a first step S1 a semantic mapping of an agent data model ADM of the agent to target device data models TDDMs of target devices of the target system is performed. Each target device data model TDDM does comprise an associated suitability model SM.

In a further step S2 a suitability of each matching target device data model TDDM for the respective agent is calculated on the basis of its suitability model SM depending on resource requirements of the agent.

In a final step S3 the agent is deployed on the target device having the maximum calculated suitability.

Accordingly, the agent can be automatically deployed in the infrastructure of the target system using an automatic process including semantic mapping and calculation of a suitability. For example a user may specify which kind of agent he wants to deploy in the target system and which physical subsystem such as a pump shall be monitored by the respective agent.

Fig. 2 shows schematically a specific example illustrating the operation of the method according to the present invention. In the illustrated exemplary embodiment an agent shall be deployed to a target device. As shown in Fig. 2 a target device can be represented by a target device data model TDDM. The target device data model TDDM as illustrated in Fig. 2 can be read for instance from the resource profile database 6 of the deployment system 1. In the illustrated specific example the target device data model TDDM represents a subsystem having a pump P connected between a reservoir R and a machine M. At the pump P two different kind of sensors are provided. Sensor P1 is provided for measuring the pressure at the pump P in a pressure unit bar. Further the temperature sensor T1 is provided at the pump P measuring the temperature at the pump P in Kelvin. As illustrated schematically a suitability model SM is associated to the target device data model TDDM. The suitability model SM is a data model indicating a suitability of the respective target device represented by the target device data model TDDM taking into account the resource requirements of the agent. In a possible embodiment the suitability model SM can comprise at least one suitability function SF of different target resources r.

As a possible embodiment the suitability value SV can be calculated for the respective suitability function SF as follows:

$$SV = SF \ (r_1, r_2 .. \ r_q) \ x \ FR$$

wherein $r_i$ are the required resources and FR is in a possible embodiment a binary functional requirement flag. The functional requirement flag FR can indicate in a specific embodiment whether a fitting conversion mapper CM is available for the respective target device data model TDDM or not. If a conversion mapper CM is available the functional requirement flag FR is set to logical HIGH and if no conversion mapper CM is available in the database the functional requirement flag FR is set to logical LOW.

An agent can be represented by different agent data models ADMs as also illustrated in Fig. 2. In the illustrated simple example the agent is an analytical software application program which may cause an alarm A depending on the received sensor data. A first agent data model ADM1 has as an input an element sensor "SEN" connected to a detection function DF generating an alarm A. In this first agent data model ADM1 the input is a general sensor not a specific kind of sensor. In contrast the second agent data model ADM2 has an input which comprises a sensor of a specific sensor type, i.e. a temperature sensor T-SEN. The sensor input of the second agent data model ADM2 is also connected to detection function DF for evaluating the received data to ring an alarm A.

Further as illustrated in Fig. 2 the target device data model TDDM comprises two outputs, i.e. the virtual sensor pressure element P1 and the virtual temperature sensor element T1 as shown in Fig. 2. In the illustrated simple example the virtual pressure sensor element P1 measures the pressure at the pump P in bar. Further the virtual temperature sensor element T1 measures the temperature at the pump P in Kelvin. After having selected an agent different available agent data models ADMs of this agent can be mapped to the target device data models TDDMs of the target system read from the resource profile database 6. In a preferred embodiment a semantic matching can be performed by the mapping unit 2 of the deployment system 1. The semantic matching is performed to identify information which is semantically related. For instance the virtual pressure sensor P1 can be identified as being of the type sensor. Consequently the input "SEN" of the first agent data model ADM1 can be mapped to the virtual sensor element P1 of the target device data model TDDM. In the same way the virtual sensor element T1 forming an output of the target device data model TDDM can also be identified as being of the type sensor. Accordingly the input "SEN" of the first agent data model ADM1 can also be mapped to the second output of the target device data model TDDM as shown in Fig. 2. Since the sensor input of the first agent data model ADM1 is a general sensor input there is no compatibility problem when the output T1 supplies to the measured temperature sensor data in the temperature unit Kelvin.

In contrast in the second agent data model ADM2, the agent has an input comprising a specific kind of sensor, i.e. a temperature sensor requiring to receive the data in the temperature measurement unit Celsius as illustrated in Fig. 2. Accordingly, the second agent data model ADM2, requires a conversion mapper CM. In a preferred embodiment the compatibility between inputs of the agent data model ADM of the selected agent and outputs of the target device data model TDDM of the target device having the maximum calculated suitability is checked before deployment of the agent on the respective target device. If the inputs of the agent data model ADM of the selected agent and the outputs of the target device data model TDDM are not compatible suitable conversion mappers CMs are automatically inserted to provide the necessary compatibility.

After having calculated a suitability for all matching target device data model TDDM, for the respective agent on the basis of the associated suitability models SMs the most suitable target device for the agent comprising the maximum calculated suitability can only be chosen for deployment of the agent if compatibility between the inputs of the agent data model ADM and the outputs of the respective target device data model TDDM of the target device can be achieved.

In the illustrated example of Fig. 2 the second agent data model ADM2 of the agent can only be used if a compatibility mapper CM is available which is adapted to convert temperature sensor data in Kelvin into temperature sensor data in Celsius. In a possible implementation this can be achieved using a binary functional requirement flag FR. If a fitting conversion mapper CM is available in the conversion mapper library CML the functional requirement flag is set to binary 1. In contrast if no conversion mapper is available in the conversion mapper library CML, the functional requirement flag FR is set to logical LOW (0 / zero).

In the illustrated example of Fig. 2 the first and second agent data model ADM1, ADM2 of the same selected agent can be mapped semantically with a plurality of different target device data models TDDMs to provide a semantic mapping or a semantic matching. A most suitable matching target device data model TDDM can be extracted based on a calculated suitability value SV using the associated suitability model SM. If some inputs are not compatible the deployment system can automatically introduce fitting conversion mappers CMs which map the measurements or sensor data to the required inputs of the agent data model ADM. These conversion mappers CMs can be automatically inserted into the data flow.

In a preferred embodiment the inputs of the selected agent data model ADM are mapped to the target device data model TDDM stored in the resource profile database in step S1 through semantic matching using a resource description context of the target device data models. The resource description or context can be formed by a sub-set of the taxonomy which is relevant for the agent e.g. in the given example by a sensor or virtual sensor.

With the method or system according to the present invention it is possible to automatically deploy any kind of analytical software application or agent on a target device. The target device can be a device in the field such as a programmable logic controller PLC, a smart sensor or a data concentrator box. The target device can be even a cloud system component. The method according to the present invention automatically generates a glue code that can map the agent data model ADM to a target device data model TDDM of the target system. The deployment method and deployment system according to the present invention automatically decides where to deploy the agent and how to map the sensory input of the target device in a way it is expected by the analytical software program or agent. The target system can be any kind of industrial automation system for example a manufacturing system or a processing system such as a plant control in an energy production system. However, the deployment method and deployment system is not limited to these technical domains and can provide a benefit to any domain where sensory measurements are used to derive decisions for triggering alarms or to generate control signals. The deployment method and deployment system is especially beneficial if the analytical software or agent is not fixed during engineering of the target system but can be modified at a later stage. Consequently the deployment approach according to the present invention is especially relevant for realizing App-based business models where Apps or agents are developed independently from a concrete target system and are deployed later in various different target systems or target machines.

An advantage of the deployment method according to the present invention results in that the deployment of an agent can be performed fully automatically. Therefore customers can adapt new agents and new agent versions more rapidly. The automatic deployment method according to the present invention reduces any necessary programming efforts significantly. Further the costs for deployment of agents in different target systems are reduced. Further the deployment method according to the present invention automatically answers the question where to deploy an agent in the target system such as a plant environment. The deployment method according to the present invention utilizes a semantic description of the environment and the target device capabilities and interfaces or resources to define the deployment environment. It uses functional building blocks or conversion mappers to map resource data such as sensor signals. A deployment method and deployment system according to the present invention can be used for planning and to generate automatically mapper workflows. The deployment method according to the present invention can be based on a semantic description of device interfaces and device capabilities. Additionally the requirements of the agent can be taken into account. A matching device description and device requirements in a deployment system according to the present invention allow to automatically select a target device and to provide and generate automatically data conversion algorithms for each data point required by the agent.

The analytical application or agent can run either by a remote diagnostic center on a plant or SCADA level or even closer to a target device. A target device can be any kind of target device in the field for instance a gas turbine or a wind turbine. The deployment method is useful for any technical domain where analytical applications or agents have to be provided in a heterogeneous environment, for instance in process industries or the like.

**Claims**

1. A method for deploying an agent to a target device of a target system, wherein the agent comprises analytical software applications programs, comprising the steps of:

a) performing (S1) a semantic mapping of inputs of an agent data model, ADM, of said agent to outputs of the target device data models, TDDM, of target devices of said target system, by using a resource description context of the target device data models, wherein the agent data model represents said agent, and the target device data models represents target devices of said target system, wherein each target device data model, TDDM, comprises an associated suitability model, SM, wherein said suitability model is a data model indicating a suitability of the respective target device represented by the target device data models, TDDM, taking into account resource requirements of the agent, wherein the outputs of each target device data model, TDDM, of target devices of said target system provide sensor data of sensor elements of the respective target device data model, TDDM, and wherein the inputs of an agent data model, ADM, of said agent comprise sensor data of sensor elements;

b) calculating (S2) a suitability value of each matching target device data model, TDDM, for the respective agent on the basis of its suitability model, SM, comprising a suitability function, SF, of different target resources, r, depending on the resource requirements of the agent; and

c) deploying (S3) the agent on the target device having the maximum calculated suitability value, whereby the compatibility regarding format between the inputs of the agent data models, ADMs, of the agent and outputs of the target device data model, TDDM, of the target device having the maximum calculated suitability value is checked before deployment of the agent on the respective target device,

wherein if the inputs of the agent data model, ADM, of the agent and the outputs of the target device data model, TDDM, having the maximum calculated suitability value are not compatible regarding format, conversion mappers, CM, are inserted automatically to provide compatibility, and

wherein each conversion mapper, CM, is adapted to convert the sensor data provided by a sensor element of the target device data model, TDDM, into a signal format expected by a corresponding input of the agent data model, ADM, of the agent.

2. The method according to claim 1 wherein the target resources, r, comprise sensor resources, computation resources, memory resources and/or communication resources.

3. The method according to claim 1 or 2 wherein the target device data models, TDDM, of target devices of said target system are stored in a resource profile database (6).

4. The method according to claim 3 wherein a taxonomy of the target system is stored in the resource profile database (6), wherein the taxonomy comprises triples indicating a structure of said target system.

5. The method according to any of the preceding claims 1 to 4 wherein the agent data model, ADM, of an agent is read from a set of agent data models, ADMs, stored in an agent profile database (5) for performing the semantic mapping to the target device data models, TDDMs, of target devices of said target system.

6. The method according to claim 5 wherein inputs of the agent data model, ADM, are mapped to the target device data models, TDDMs, stored in the resource profile data-base (6) through semantic matching using a resource description context of the target device data models, TDDMs.

7. The method according to claim 6 wherein the conversion mappers, CM, are read from a conversion mapper library stored in a conversion mapper database (7).

8. The method according to claim 7 wherein a set of predefined conversion mappers, CM, is stored in the conversion mapper database (7).

9. The method according to claim 8 wherein the conversion mappers, CMs, inserted automatically between the outputs of the target device data model, TDDM and the inputs of the agent data model, ADM, of the agent convert sensor data generated by sensor elements of the target device data model, TDDM, into predefined signal formats expected by inputs of the agent data model, ADM, with respect to a sensor data sampling rate, a sensor signal domain and/or sensor data units.

10. A deployment system (1) for deployment of an agent to a target device of a target system, wherein the agent comprises analytical software applications programs, said deployment system (1) comprising:

a) a mapping unit (2) adapted to perform a semantic mapping of inputs of an agent data model, ADM, of the agent to outputs of the target device data models, TDDMs, of target devices of said target system, by using a resource description context of the target device data models, wherein the agent data model represents said agent, and the target device data models represents target devices of said target system, wherein each target device data model, TDDM, comprises an associated suitability model, wherein said suitability model is a data model indicating a suitability of the respective target device represented by the target device data models, TDDMs, taking into account resource requirements of the agent, wherein the outputs of each target device data model, TDDM, of target devices of said target system are configured to provide sensor data of sensor elements of the respective target device data model, TDDM, and wherein the inputs of an agent data model, ADM, of said agent comprise sensor data of sensor elements;

b) a calculation unit (3) adapted to calculate a suitability value of each matching target device data model, TDDM, for the respective agent on the basis of its suitability model, SM, comprising a suitability function, SF, of different target resources, r, depending on the resource requirements of the agent; and

c) a deployment unit (4) adapted to deploy an agent on the target device having the maximum calculated suitability value, whereby the compatibility regarding format between the inputs of the agent data models, ADMs, of the agent and outputs of the target device data model, TDDM, of the target device having the maximum calculated suitability value is checked before deployment of the agent on the respective target device, wherein if the inputs of the agent data model, ADM, of the agent and the outputs of the target device data model, TDDM, having the maximum calculated suitability value are not compatible regarding format, conversion mappers, CM, are inserted automatically to provide compatibility, and

wherein each conversion mapper, CM, is adapted to convert the sensor data provided by a sensor element of the target device data model, TDDM, into a signal format expected by a corresponding input of the agent data model, ADM, of the agent.

11. The deployment system according to claim 10 further comprising

- an agent profile database (5) which stores a set of agent data models, ADMs,
- a resource profile database (6) which stores target device data models, TDDMs, of target devices of a target system, and
- a conversion mapper database (7) which stores a set of predefined conversion mappers, CMs.

**Patentansprüche**

1. Verfahren zum Einsetzen eines Agenten auf einer Zielvorrichtung eines Zielsystems, wobei der Agent analytische Softwareanwendungsprogramme umfasst, umfassend die folgenden Schritte:

a) Durchführen (S1) einer semantischen Zuordnung von Eingaben eines Agentendatenmodells (ADM) des Agenten zu Ausgaben der Zielvorrichtungsdatenmodelle (target device data model - TDDM) von Zielvorrichtungen des Zielsystems unter Verwendung eines Ressourcenbeschreibungskontexts der Zielvorrichtungsdatenmodelle, wobei das Agentendatenmodell den Agenten darstellt und die Zielvorrichtungsdatenmodelle Zielvorrichtungen des Zielsystems darstellen, wobei jedes Zielvorrichtungsdatenmodell (TDDM) ein zugehöriges Eignungsmodell (suitability model - SM) umfasst, wobei das Eignungsmodell ein Datenmodell ist, das eine Eignung der jeweiligen durch die Zielvorrichtungsdatenmodelle (TDDM) dargestellten Zielvorrichtung unter Berücksichtigung der Ressourcenanforderungen des Agenten angibt, wobei die Ausgaben jedes Zielvorrichtungsdatenmodells (TDDM) von Zielvorrichtungen des Zielsystems Sensordaten von Sensorelementen des jeweiligen Zielvorrichtungsdatenmodells (TDDM) bereitstellen und wobei die Eingaben eines Agentendatenmodells (ADM) des Agenten Sensordaten von Sensorelementen umfassen;

b) Berechnen (S2) eines Eignungswerts jedes passenden Zielvorrichtungsdatenmodells (TDDM) für den jeweiligen Agenten auf Grundlage seines Eignungsmodells (SM), das eine Eignungsfunktion (suitability function - SF) unterschiedlicher Zielressourcen (r) abhängig von den Ressourcenanforderungen des Agenten umfasst; und

c) Einsetzen (S3) des Agenten auf der Zielvorrichtung mit dem maximalen berechneten Eignungswert, wobei

die Formatkompatibilität zwischen den Eingaben der Agentendatenmodelle (ADM) des Agenten und Ausgaben des Zielvorrichtungsdatenmodells (TDDM) der Zielvorrichtung mit dem maximalen berechneten Eignungswert vor dem Einsatz des Agenten auf der jeweiligen Zielvorrichtung überprüft wird, wobei, wenn die Eingaben des Agentendatenmodells (ADM) des Agenten und die Ausgaben des Zielvorrichtungsdatenmodells (TDDM) mit dem maximalen berechneten Eignungswert hinsichtlich des Formats nicht kompatibel sind, Konvertierungs-Mapper (conversion mapper - CM) automatisch eingefügt werden, um Kompatibilität bereitzustellen, und wobei jeder Konvertierungs-Mapper (CM) dazu ausgelegt ist, die durch ein Sensorelement des Zielvorrichtungsdatenmodells (TDDM) bereitgestellten Sensordaten in ein Signalformat zu konvertieren, das durch eine entsprechende Eingabe des Agentendatenmodells (ADM) des Agenten erwartet wird.

2. Verfahren nach Anspruch 1, wobei die Zielressourcen (r) Sensorressourcen, Rechenressourcen, Speicherressourcen und/oder Kommunikationsressourcen umfassen.

3. Verfahren nach Anspruch 1 oder 2, wobei die Zielvorrichtungsdatenmodelle (TDDM) von Zielvorrichtungen des Zielsystems in einer Ressourcenprofildatenbank (6) gespeichert sind.

4. Verfahren nach Anspruch 3, wobei eine Taxonomie des Zielsystems in der Ressourcenprofildatenbank (6) gespeichert ist, wobei die Taxonomie Tripel umfasst, die eine Struktur des Zielsystems angeben.

5. Verfahren nach einem der vorhergehenden Ansprüche 1 bis 4, wobei das Agentendatenmodell (ADM) eines Agenten aus einem Satz von Agentendatenmodellen (ADM) gelesen wird, der in einer Agentenprofildatenbank (5) gespeichert ist, um die Semantikzuordnung zu den Zielvorrichtungsdatenmodellen (TDDM) von Zielvorrichtungen des Zielsystems durchzuführen.

6. Verfahren nach Anspruch 5, wobei Eingaben des Agentendatenmodells (ADM) durch semantischen Abgleich unter Verwendung eines Ressourcenbeschreibungskontexts der Zielvorrichtungsdatenmodelle (TDDM) den in der Ressourcenprofildatenbank (6) gespeicherten Zielvorrichtungsdatenmodellen (TDDM) zugeordnet werden.

7. Verfahren nach Anspruch 6, wobei die Konvertierungs-Mapper (CM) aus einer Konvertierungs-Mapper-Bibliothek gelesen werden, die in einer Konvertierungs-Mapper-Datenbank (7) gespeichert ist.

8. Verfahren nach Anspruch 7, wobei ein Satz vordefinierter Konvertierungs-Mapper (CM) in der Konvertierungs-Mapper-Datenbank (7) gespeichert ist.

9. Verfahren nach Anspruch 8, wobei die Konvertierungs-Mapper (CM), die automatisch zwischen den Ausgaben des Zielvorrichtungsdatenmodells (TDDM) und den Eingaben des Agentendatenmodells (ADM) des Agenten eingefügt werden, durch Sensorelemente des Zielvorrichtungsdatenmodells (TDDM) generierte Sensordaten in vordefinierte Signalformate konvertieren, die durch Eingaben des Agentendatenmodells (ADM) in Bezug auf eine Sensordaten-Abtastrate, eine Sensorsignaldomäne und/oder Sensordateneinheiten erwartet werden.

10. Einsatzsystem (1) zum Einsatz eines Agenten auf einer Zielvorrichtung eines Zielsystems, wobei der Agent analytische Softwareanwendungsprogramme umfasst, wobei das Einsatzsystem (1) Folgendes umfasst:

a) eine Zuordnungseinheit (2), die zum Durchführen einer semantischen Zuordnung von Eingaben eines Agentendatenmodells (ADM) des Agenten zu Ausgaben der Zielvorrichtungsdatenmodelle (TDDM) von Zielvorrichtungen des Zielsystems unter Verwendung eines Ressourcenbeschreibungskontexts der Zielvorrichtungsdatenmodelle ausgelegt ist, wobei das Agentendatenmodell den Agenten darstellt und die Zielvorrichtungsdatenmodelle Zielvorrichtungen des Zielsystems darstellen, wobei jedes Zielvorrichtungsdatenmodell (TDDM) ein zugehöriges Eignungsmodell umfasst, wobei das Eignungsmodell ein Datenmodell ist, das eine Eignung der jeweiligen durch die Zielvorrichtungsdatenmodelle (TDDM) dargestellten Zielvorrichtung unter Berücksichtigung der Ressourcenanforderungen des Agenten angibt, wobei die Ausgaben jedes Zielvorrichtungsdatenmodells (TDDM) von Zielvorrichtungen des Zielsystems dazu konfiguriert sind, Sensordaten von Sensorelementen des jeweiligen Zielvorrichtungsdatenmodells (TDDM) bereitzustellen und wobei die Eingaben eines Agentendatenmodells (ADM) des Agenten Sensordaten von Sensorelementen umfassen;

b) eine Berechnungseinheit (3), die zum Berechnen eines Eignungswerts jedes passenden Zielvorrichtungsdatenmodells (TDDM) für den jeweiligen Agenten auf Grundlage seines Eignungsmodells (SM), das eine Eignungsfunktion (SF) unterschiedlicher Zielressourcen (r) abhängig von den Ressourcenanforderungen des Agenten umfasst, ausgelegt ist; und

c) eine Einsatzeinheit (4), die zum Einsetzen eines Agenten auf der Zielvorrichtung mit dem maximalen berechneten Eignungswert ausgelegt ist, wobei die Formatkompatibilität zwischen den Eingaben der Agentendatenmodelle (ADM) des Agenten und Ausgaben des Zielvorrichtungsdatenmodells (TDDM) der Zielvorrichtung mit dem maximalen berechneten Eignungswert vor dem Einsatz des Agenten auf der jeweiligen Zielvorrichtung überprüft wird, wobei, wenn die Eingaben des Agentendatenmodells (ADM) des Agenten und die Ausgaben des Zielvorrichtungsdatenmodells (TDDM) mit dem maximalen berechneten Eignungswert hinsichtlich des Formats nicht kompatibel sind, Konvertierungs-Mapper (CM) automatisch eingefügt werden, um Kompatibilität bereitzustellen, und

wobei jeder Konvertierungs-Mapper (CM) dazu ausgelegt ist, die durch ein Sensorelement des Zielvorrichtungsdatenmodells (TDDM) bereitgestellten Sensordaten in ein Signalformat zu konvertieren, das durch eine entsprechende Eingabe des Agentendatenmodells (ADM) des Agenten erwartet wird.

11. Einsatzsystem nach Anspruch 10, ferner umfassend

- eine Agentenprofildatenbank (5), die einen Satz von Agentendatenmodellen (ADM) speichert,
- eine Ressourcenprofildatenbank (6), die Zielvorrichtungsdatenmodelle (TDDM) von Zielvorrichtungen eines Zielsystems speichert, und
- eine Konvertierungs-Mapper-Datenbank (7), die einen Satz vordefinierter Konvertierungs-Mapper (CM) speichert.

## Revendications

1. Procédé de déploiement d'un agent sur un dispositif cible d'un système cible, dans lequel l'agent comprend des programmes d'applications logicielles analytiques, comprenant les étapes suivantes :

a) effectuer (S1) un mappage sémantique des entrées d'un modèle de données d'agent (ADM) dudit agent, vers les sorties des modèles de données de dispositif cible (TDDM) des dispositifs cibles dudit système cible, en utilisant un contexte de description des ressources des modèles de données de dispositif cible, dans lequel le modèle de données d'agent représente ledit agent, et les modèles de données de dispositif cible représentent les dispositifs cibles dudit système cible, dans lequel chaque modèle de données de dispositif cible (TDDM) comprend un modèle d'adéquation (SM) associé dans lequel ledit modèle d'adéquation est un modèle de données indiquant l'adéquation du dispositif cible respectif représenté par les modèles de données de dispositif cible (TDDM) en tenant compte des besoins en ressources de l'agent, dans lequel les sorties de chaque modèle de données de dispositif cible (TDDM) des dispositifs cibles dudit système cible fournissent des données de capteur des éléments de capteur du modèle de données de dispositif cible (TDDM) respectif et dans lequel les entrées d'un modèle de données d'agent (ADM) dudit agent comprennent des données de capteur des éléments de capteur ;
b) calculer (S2) une valeur d'adéquation de chaque modèle de données de dispositif cible (TDDM) correspondant pour l'agent concerné sur la base de son modèle d'adéquation (SM) comprenant une fonction d'adéquation (SF) de différentes ressources cibles (r) en fonction des exigences de l'agent en matière de ressources ; et
c) déployer (S3) l'agent sur le dispositif cible ayant la valeur d'adéquation maximale calculée, de sorte que la compatibilité de format entre les entrées des modèles de données d'agent (ADM) de l'agent et les sorties du modèle de données de dispositif cible (TDDM) du dispositif cible ayant la valeur d'adéquation maximale calculée est vérifiée avant le déploiement de l'agent sur le dispositif cible concerné,
dans lequel, si les entrées du modèle de données d'agent (ADM) et les sorties du modèle de données de dispositif cible (TDDM) ayant la valeur d'adéquation maximale calculée ne sont pas compatibles en ce qui concerne le format, des mappages de conversion (CM) sont insérés automatiquement pour assurer la compatibilité, et
dans lequel chaque mappage de conversion (CM) est adapté pour convertir les données de capteur fournies par un élément de capteur du modèle de données de dispositif cible (TDDM) dans un format de signal attendu par une entrée correspondante du modèle de données d'agent (ADM) de l'agent.

2. Procédé selon la revendication 1, dans lequel les ressources cibles (r) comprennent des ressources de capteurs, des ressources de calcul, des ressources de mémoire et/ou des ressources de communication.

3. Procédé selon la revendication 1 ou 2, dans lequel les modèles de données de dispositif cible (TDDM) desdits systèmes cible sont stockés dans une base de données de profil de ressource (6).

4. Procédé selon la revendication 3, dans lequel une taxonomie du système cible est stockée dans la base de données de profil de ressource (6), dans lequel la taxonomie comprend des triples indiquant une structure dudit système cible.

5. Procédé selon l'une quelconque des revendications précédentes 1 à 4, dans lequel le modèle de données d'agent (ADM) d'un agent est lu à partir d'un ensemble de modèles de données d'agent (ADM) stockés dans une base de données de profil d'agent (5) pour effectuer le mappage sémantique avec les modèles de données de dispositif cible (TDDM) de dispositifs cibles dudit système cible.

6. Procédé selon la revendication 5, dans lequel les entrées du modèle de données d'agent (ADM) sont mises en correspondance avec les modèles de données de dispositif cible (TDDM) stockés dans la base de données de profil de ressource (6) par le biais d'une correspondance sémantique utilisant un contexte de description des ressources des modèles de données de dispositif cible (TDDM).

**7.** Procédé selon la revendication 6, dans lequel les mappages de conversion (CM) sont lus à partir d'une bibliothèque de mappages de conversion stockée dans une base de données de mappage de conversion (7).

**8.** Procédé selon la revendication 7, dans lequel un ensemble de mappages de conversion (CM) prédéfini est stocké dans la base de données de mappage de conversion (7).

**9.** Procédé selon la revendication 8, dans lequel les mappages de conversion (CM) insérés automatiquement entre les sorties du modèle de données de dispositif cible (TDDM) et les entrées du modèle de données d'agent (ADM) de l'agent convertissent les données de capteur générées par les éléments de capteur du modèle de données de dispositif cible (TDDM) en formats de signal prédéfinis attendus par les entrées du modèle de données d'agent (ADM) en ce qui concerne un taux d'échantillonnage de données de capteur, un domaine de signal de capteur et/ou des unités de données de capteur.

**10.** Système de déploiement (1) pour le déploiement d'un agent sur un dispositif cible d'un système cible, dans lequel l'agent comprend des programmes d'applications logicielles analytiques, ledit système de déploiement (1) comprenant :

a) une unité de mappage (2) adaptée pour effectuer un mappage sémantique des entrées d'un modèle de données d'agent (ADM) de l'agent aux sorties des modèles de données de dispositif cible (TDDM) des dispositifs cibles dudit système cible, en utilisant un contexte de description des ressources des modèles de données de dispositif cible, dans lequel le modèle de données d'agent représente ledit agent, et les modèles de données de dispositif cible représentent les dispositifs cibles dudit système cible, dans lequel chaque modèle de données de dispositif cible (TDDM) comprend un modèle d'adéquation associé, dans lequel ledit modèle d'adéquation est un modèle de données indiquant l'adéquation du dispositif cible respectif représenté par les modèles de données de dispositif cible (TDDM) en tenant compte des besoins en ressources de l'agent, dans lequel les sorties de chaque modèle de données de dispositif cible (TDDM) des dispositifs cibles dudit système cible sont configurées pour fournir des données de capteur des éléments de capteur du modèle de données de dispositif cible (TDDM) respectif, et dans lequel les entrées d'un modèle de données d'agent (ADM) dudit agent comprennent des données de capteur des éléments de capteur ;
b) une unité de calcul (3) adaptée pour calculer une valeur d'adéquation de chaque modèle de données de dispositif cible (TDDM) correspondant pour l'agent concerné sur la base de son modèle d'adéquation (SM) comprenant une fonction d'adéquation (SF) de différentes ressources cibles (r) en fonction des exigences de l'agent en matière de ressources ; et
c) une unité de déploiement (4) adaptée pour déployer un agent sur le dispositif cible ayant la valeur d'adéquation maximale calculée, la compatibilité de format entre les entrées des modèles de données d'agent (ADM) de l'agent et les sorties du modèle de données de dispositif cible (TDDM) du dispositif cible ayant la valeur d'adéquation maximale calculée étant vérifiée avant le déploiement de l'agent sur le dispositif cible respectif, dans lequel, si les entrées du modèle de données d'agent (ADM) de l'agent et les sorties du modèle de données de dispositif cible (TDDM) ayant la valeur d'adéquation maximale calculée ne sont pas compatibles en ce qui concerne le format, des mappages de conversion (CM) sont insérés automatiquement pour assurer la compatibilité, et

dans lequel chaque mappage de conversion (CM) est adapté pour convertir les données de capteur fournies par un élément de capteur du modèle de données de dispositif cible (TDDM) dans un format de signal attendu par une entrée correspondante du modèle de données d'agent (ADM) de l'agent.

**11.** Système de déploiement selon la revendication 10 comprenant en outre

- une base de données de profil d'agent (5) qui stocke un ensemble de modèles de données d'agent (ADM),
- une base de données de profil de ressource (6) qui stocke des modèles de données de dispositif cible (TDDM) de dispositifs cibles d'un système cible, et
- une base de données de mappage de conversion (7) qui stocke un ensemble de mappages de conversion (CM) prédéfinis.

**FIG 1**

1

ADM — 5

TDDM — 6

7

2

MU

CM

CU — 3

DU — 4

**FIG 3**

S1

S2

S3

# FIG 2

EP 3 396 538 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VLADIMIR VILLASEÑOR HERRERA et al.** *An agent-based system for orchestration support of web service-enabled devices in discrete manufacturing systems,* 17 May 2011

- **MATTHIAS LOSKYLL et al.** *Semantic Service Discovery and Orchestration for Manufacturing Processes,* 05 September 2011